Europäisches Patentamt

European Patent Office

Office européen des brevets

(19)

(11) Veröffentlichungsnummer: **0 023 318**
A1

(12) **EUROPÄISCHE PATENTANMELDUNG**

(21) Anmeldenummer: 80104175.7

(22) Anmeldetag: 17.07.80

(51) Int. Cl.³: **C 08 J 5/18**
C 08 K 5/00, B 44 F 1/12
B 42 D 15/02

(30) Priorität: 24.07.79 DE 2929867

(43) Veröffentlichungstag der Anmeldung:
04.02.81 Patentblatt 81/5

(84) Benannte Vertragsstaaten:
BE CH DE FR GB LI LU NL

(71) Anmelder: **HOECHST AKTIENGESELLSCHAFT**
Zentrale Patentabteilung Postfach 80 03 20
D-6230 Frankfurt/Main 80(DE)

(72) Erfinder: Brillowski, Hubert
D-8261 Maierhoff 77, Post Hirten(DE)

(72) Erfinder: Steffen, Robert, Dr.
Otacharstrasse 11
D-8261 Burgkirchen/Alz(DE)

(54) Thermoplastische Kunststoffolie mit grauem Farbton, diese Folie enthaltende Verbunde und Verfahren zur Herstellung solcher Verbunde.

(57) Bei einer grau gefärbten Folie aus thermoplastischen Kunststoffen wird die Graufärbung dadurch erreicht, daß dem thermoplastischen Kunststoff eine Mischung aus

a) Weißpigmenten und/oder Füllstoffen von weißer Farbe, und

b) mindestens 2 von solchen organischen Buntpigmenten, deren Mischung einen grauen bis schwarzen Farbstoff besitzt,

einverleibt wird. Diese grau gefärbten Folien und Verbunde aus diesen Folien mit anderen Folien besitzen ein unauffälliges Aussehen und eine starke Verdeckungswirkung, und eignen sich daher besonders gut zur Herstellung von fälschungssicheren Gebrauchsartikeln, wie Ausweis- Scheck- und Kreditkarten.

HOECHST AKTIENGESELLSCHAFT   HOE 79/F 915        Dr.GL/ei

**BEZEICHNUNG GEÄNDERT**
**siehe Titelseite**

Thermoplastische Kunststoffolie mit grauem Farbton

Die Erfindung betrifft eine grau gefärbte, thermoplastische Kunststoffolie und Verbunde aus dieser Folie mit anderen Folien.

Gebrauchsartikel, die einen gewissen Wert darstellen, wie Dokumente, Zahlungsmittel etc., sollen so beschaffen sein, daß ihre Fälschung oder Verfälschung einerseits möglichst schwierig zu bewerkstelligen, andererseits möglichst leicht und schnell zu erkennen ist.

In letzter Zeit werden zunehmend thermoplastische Kunststoffolien zur Herstellung von solchen Gebrauchsartikeln, wie z.B. Ausweiskarten, Scheckkarten, Kreditkarten, eingesetzt. Dabei sind vor allem Verbunde solcher Folien untereinander sowie mit anderen, meist bedruckten, beschriebenen oder beschichteten Informationsträgern, wie zum Beispiel Papier, Photographien, Magnetschichtträgern, üblich, wobei diese Verbunde auch Metallfolien, vollflächig oder in Streifen, enthalten können.

Aus der deutschen Patentschrift 24 43 164 und aus der deutschen Offenlegungsschrift 25 39 163 sind Verbunde von mindestens zwei thermoplastischen Kunststoffolien bekannt, wobei eine Folie des Verbundes im UV-Licht oder polarisierten Licht erkennbare Markierungen aufweist. Diese Folienverbunde sind weitgehend fälschungssicher, da sie eine Markierung besitzen, die mit dem Auge ohne die genannten Hilfsmittel nicht feststellbar ist. Die Herstellung dieser markierten Folien ist jedoch an bestimmte im UV-Licht fluoreszierende Stoffe (DE-PS 24 43 164) bzw. an ein bestimmtes Herstellungsverfahren zur Erreichung der optischen Inhomogenitäten (DE-OS 25 39 163) gebunden.

Für den eingangs genannten Verwendungszweck sollen die Folienverbunde auch noch ein an sich unauffälliges Aussehen besitzen, weil dies zu einer erhöhten Schutzwirkung beiträgt.

Aufgabe der Erfindung ist es daher, eine Folie zu schaffen, die in einfacher Weise herstellbar ist und sich aufgrund eines sehr unauffälligen Aussehens besonders vorteilhaft zur Herstellung von fälschungssicheren Verbunden eignet.

Diese Aufgabe wird erfindungsgemäß gelöst durch eine grau gefärbte, thermoplastische Kunststoffolie, dadurch gekennzeichnet, daß sie

a) Weißpigmente und/oder Füllstoffe von weißer Farbe; und

b) mindestens zwei von solchen organischen Buntpigmenten, deren Mischung einen grauen bis schwarzen Farbton besitzt, enthält.

Die Komponente a) besteht vorzugsweise aus Antimonoxid, Kaolin, Kieselsäure, Kreide, Schwerspat, Titandioxid, Zinksulfid oder Mischungen davon. Besonders bevorzugt sind das Weißpigment Titandioxid in der Rutil- oder Anatas-Modifikation, der Füllstoff Kreide ($CaCO_3$) oder Mischungen aus diesen.

Die Komponente b) - das ist die grau bis schwarz gefärbte Mischung aus mindestens zwei entsprechenden organischen Buntpigmenten - besteht vorzugsweise aus roten und grünen, violetten und grünen oder aus violetten, gelben und blauen organischen Pigmenten. Dabei sind in der Mischung die roten und grünen Pigmenge im Gewichtsmengenverhältnis von 6 bis 12 : 10, vorzugsweise von 8 : 10, vorhanden, die violetten und grünen im Gewichtsmengenverhältnis von 5 bis 15 : 10, vorzugsweise von 7 : 10, und die violetten, gelben und blauen organischen Pigmente im Gewichtsmengenverhältnis von 20 bis 50 : 30 bis 60 : 10, vorzugsweise von 35 : 50 : 10, vorhanden.

Geeignete organische Rotpigmente sind beispielsweise solche aus der Gruppe der Mono- und Disazopigmente des ß-Naphthols, Naphthalintetracarbonsäurepigmente, Monoazopigmente des Naphthols AS, Perylentetracarbonsäurepigmente, Azofarbstoffpigmente der ß-Oxynaphthoesäure, Azofarbstoffpigmente des ß-Naphthols und Chinacridonpigmente.

Geeignete organische Grünpigmente sind beispielsweise diejenigen vom Typ halogeniertes Kupferphthalocyanin. Geeignete organische Violettpigmente sind beispielsweise solche aus der Gruppe der Thioindigopigmente, Chinacridonpigmente und Dioxazinpigmente. Geeignete organische Gelbpigmente sind beispielsweise solche aus der Gruppe der Monoazopigmente und Disazopigmente. Geeignete organische Blaupigmente sind beispielsweise solche aus der Gruppe der Kupferphthalocyanine und der Mischpigmente aus oxidierten, aromatischen Aminen mit chinoider Struktur.

Zur Erzielung einer vorteilhaften Graufärbung enthält die erfindungsgemäße Folie auf 100 Gew.-Teile der Komponente a) 0,3 bis 35, vorzugsweise 2 bis 10 Gew.-Teile der Komponente b), was einem Gewichtsmengenverhältnis von Komponente a) : Komponente b) wie 1 : 0,003 bis 1 : 0,35, vorzugsweise 1 : 0,02 bis 1 : 0,10, entspricht. Dabei beträgt die Gesamtmenge an Komponente a) und Komponente b) im allgemeinen 1 bis 25 Gew.-%, vorzugsweise 2 bis 12 Gew.-%, bezogen auf thermoplastischen Kunststoff.

Die erfindungsgemäße Folie besteht also im wesentlichen aus 75 bis 99, vorzugsweise 88 bis 98 Gew.-% von mindestens einem thermoplastischen Kunststoff und 1 bis 25, vorzugsweise 2 bis 12 Gew.-%, von den Komponenten a) und b).

Die erfindungsgemäß einzusetzenden, in der Regel pulverförmigen Weißpigmente, weißgefärbten Füllstoffe und organischen Buntpigmente sind bekannt und am Markt erhältlich.

Als thermoplastische Kunststoffe (zur Herstellung der erfindungsgemäßen Folie) kommen grundsätzlich alle jene in
Betracht, die sich nach den üblichen Verfahren, wie Extrusions-, Kalandrier-, Gieß- oder Preßverfahren zu Folien verarbeiten lassen.

Beispielsweise seien genannt Olefinpolymerisate, wie Polyethylen oder Polypropylen; Styrolpolymerisate; Polymerisate aus Acrylnitril-Butadien-Styrol (ABS), Methylmethacrylat-Butadien-Styrol (MBS) sowie Methylmethacrylat-
Acrylnitril-Butadien-Styrol (MABS); Polymerisate aus
Acrylsäure- oder Methacrylsäureester, wie Polybutylacrylat, Polymethylmethacrylat. Bevorzugt eingesetzt
werden Polymerisate auf der Basis von Vinylchlorid, das
sind Vinylchlorid-Homopolymerisate oder Copolymerisate
und Pfropfcopolymerisate aus Vinylchlorid und copolymerisierbaren Monomeren. Geeignete Comonomere sind beispielsweise Olefine und Diolefine, wie Ethylen, Propylen, Butadien; Vinylester von geradkettigen oder verzweigten Carbonsäuren mit 2 bis 20, vorzugsweise 2 bis
4 C-Atomen, wie Vinylacetat, Vinylpropionat, Vinylbutyrat, Vinylstearat; Vinylhalogenide, wie Vinylfluorid,
Vinylidenfluorid, Vinylidenchlorid; Vinylether; ungesättigte Säuren, wie Malein-, Fumar-, Acryl-, Methacrylsäure und deren Mono- oder Diester mit Mono- oder Dialkoholen mit 1 bis 10 C-Atomen; Acrylnitril, Styrol,
Cyclohexylmaleinimid. Die Vinylchloridpolymerisate sind
in der Regel hergestellt nach dem Emulsions-, Suspensions- oder Massepolymerisationsverfahren und besitzen
einen K-Wert nach Fikentscher von 50 bis 80, vorzugsweise 55 bis 70.

Es können auch Mischungen der genannten thermoplastischen Polymerisate eingesetzt werden. Bevorzugt sind Mischungen aus Vinylchlorid-Homo-, -Co- oder -Pfropfcopolymerisaten mit sogenannten Schlagzähharzen, wie beispielsweise den bereits genannten ABS-, MBS- und MABS-Polymerisaten oder chloriertem Polyethylen, und gegebenenfalls mit sogenannten Fließhilfsmitteln (processing aids), wie beispielsweise niedermolekularem Polymethylmethacrylat, wobei der Anteil der Schlagzähharze und Fließhilfsmittel in der Regel 5 bis 20 Gew.-%, bzw. 0,5 bis 5 Gew.-%, bezogen auf Vinylchloridpolymerisat, beträgt.

Den thermoplastischen Kunststoffen werden zweckmäßigerweise Verarbeitungshilfsstoffe, wie Wärme- und Lichtstabilisatoren, Gleitmittel sowie gegebenenfalls weitere besondere Additive, wie beispielsweise Antistatika, zugesetzt. Vorzugsweise werden weichmacherfreie Kunststoffmassen eingesetzt; die erfindungsgemäßen Folien können jedoch auch Weichmacher in üblichen Mengen enthalten.

Als Wärmestabilisatoren sind beispielsweise geeignet Mono- und Dialkylzinnverbindungen mit 1 bis 10 C-Atomen im Alkylrest, bei denen die restlichen Wertigkeiten des Zinns über Sauerstoff und/oder Schwefelatome mit weiteren Substituenten verbunden sind; Aminocrotonsäureester; Harnstoff- und Thioharnstoffderivate; α-Phenylindol; Salze der Erdalkalimetalle, des Zinks und Cadmiums mit aliphatischen Carbonsäuren oder Oxycarbonsäuren. Bevorzugt werden Organo-Zinn-Schwefel-Stabilisatoren, wie Di-methylzinn-bis-(2-ethylhexylthioglykolat), Di-n-butylzinn-bis-(2-ethylhexylthioglykolat), Di-n-octylzinn-bis-(2-ethylhexylthioglykolat). Die Stabilisatoren werden in Mengen von 0,2 bis 3 Gew.-%, bezogen auf thermoplastischen Kunststoff, eingesetzt; sie können auch in Mischung untereinander sowie mit üblichen Costabilisatoren und Antioxidantien eingesetzt werden.

Als Gleitmittel können beispielsweise ein oder mehrere höhere aliphatische Carbonsäuren und Oxycarbonsäuren sowie deren Ester und Amide, wie Stearinsäure, Montansäure, Bis-stearoyl- bzw. Bis-palmitoyl-ethylendiamin, Montansäureester von Ethandiol oder 1,3-Butandiol, gegebenenfalls teilweise verseift (Montansäureesterwachs); Fettalkohole mit mehr als 10 C-Atomen sowie deren Ether, niedermolekulare Polyolefine sowie Hartparaffine, in Mengen von 0,1 bis 4 Gew.-%, bezogen auf thermoplastischen Kunststoff, verwendet werden.

Als Weichmacher können beispielsweise ein oder mehrere Ester aromatischer oder aliphatischer Di- und Tricarbonsäuren, höherer Alkylsulfonsäuren und der Phosphorsäuren, wie Di-2-ethylhexylphthalat, Di-2-ethylhexyladipat oder -sebacat; Alkylsulfonsäureester des Phenols und Kresols; Trikresylphosphat oder epoxidierte Soja- oder Rizinusöle eingesetzt werden.

Die Herstellung der erfindungsgemäßen Folie erfolgt vorzugsweise durch Kalandrierung oder Extrusion. Dazu werden die einzelnen Mischungskomponenten zunächst miteinander vermischt, beispielsweise in einem üblichen Schnellmischer. Beim Extrudieren werden die Mischungen mittels eines Extruders mit Breitschlitzdüse oder mit Ringdüse und Flachlegewalzenpaar, und beim Kalandrieren mittels eines Kalanders mit 2 oder mehr Walzen, vorzugsweise mit 2 bis 6 Walzen, in bekannter Weise zu Folien verarbeitet.

Die Dicke der erfindungsgemäßen Folien beträgt in der Regel 0,1 bis 0,8 mm, vorzugsweise 0,2 bis 0,6 mm.

- 7 -

Die Herstellung von Verbunden, die die erfindungsgemäßen Folien enthalten, erfolgt in üblicher Weise durch Verpressen, Verschweißen oder Verkleben, wobei gleichzeitig oder nachfolgend Prägungen angebracht werden können.

Die erfindungsgemäßen Folien sind wegen ihres unauffälligen Aussehens und ihrer ausgezeichnten Verdeckungswirkung aufgrund des grauen Farbtones zur Herstellung von Verbunden (mit anderen thermoplastischen Folien) besonders geeignet, die als Ausweis-, Scheck- und Kreditkarten oder in ähnlichen Anwendungsgebieten eingesetzt werden. Dabei ist die erfindungsgemäße Folie eine der beiden Deckfolien (Außenfolien des Verbundes). Sie verdeckt das beispielsweise auf ihrer Rückseite oder auf einer mit ihr verbundenen thermoplastischen Folie aufgebrachte Muster, Schriftzeichen oder Prägebild und macht es für das unbewaffnete menschliche Auge unsichtbar. Diese Informationszeichen sind jedoch beispielsweise durch Infrarotstrahlung oder Laserstrahlung (durch die erfindungsgemäße Folie hindurch) erkennbar. Die erfindungsgemäße Folie hat etwa die gleich gute Verdeckungswirkung wie beispielsweise eine mit Ruß pigmentierte thermoplastische Kunststoffolie. Während diese aber in der Regel durch ihren glänzenden schwarzen Farbton ein sehr auffallendes Aussehen besitzt, wirkt der graue Farbton der erfindungsgemäßen Folien für das Auge unscheinbar, unauffällig und nicht aufdringlich.

Die erfindungsgemäßen Folien besitzen den weiteren Vorteil, daß sie leicht und mit wenig Aufwand an Material gefertigt werden können.

Im folgenden wird die Erfindung anhand von Beispielen näher erläutert, ohne sie auf diese Beispiele zu beschränken.

Beispiel 1

|  | Gew.-% |
|---|---|
| Vinylchlorid-Homopolymerisat vom K-Wert 60, hergestellt nach dem Suspensionspolymerisationsverfahren | 91,815 |
| Montansäureesterwachs | 1 |
| Dibutylzinndithioglykolat-Stabilisator | 1 |
| Titandioxid-Rutil-Typ | 6 |
| Perylentetracarbonsäure-Rotpigment | 0,085 |
| halogeniertes Kupferphthalocyanin-Grünpigment | 0,100 |

werden in einem Schnellmischer gemischt, auf einem Walzwerk bei 150 °C plastifiziert und auf einem 4-Walzen-Kalander bei Temperaturen von 190 bis 210 °C zu einer 0,3 mm dicken Folie kalandriert.

Diese Folie besitzt einen grauen Farbton, entsprechend den Farbmaßzahlen: $L* = 68$; $a* = -3,64$; $b* = +0,32$; im CIELab-System (DIN Entwurf 6174 vom August 1977).

Beispiel 2

|  | Gew.-% |
|---|---|
| Vinylchlorid-Mischpolymerisat mit 10 % Vinylacetat, hergestellt nach dem Suspensionspolymerisationsverfahren, K-Wert 60 | 91,83 |
| Montansäureesterwachs | 1 |
| Dibutylzinndithioglykolat-Stabilisator | 1 |
| Titandioxid-Anatas-Typ | 6 |
| Monoazo-Rotpigment der Naphthol-AS-Reihe | 0,07 |
| halogeniertes Kupferphthalocyanin-Grünpigment | 0,10 |

werden in einem Heiz-Kühlmischaggregat auf 140 °C erwärmt, abgekühlt und auf einem üblichen Einschneckenextruder mit Breitschlitzdüse bei Gehäusetemperaturen von 180 bis 200 °C zu einer Folie extrudiert, die nach Behandlung in einem Glättwalzwerk eine Dicke von 0,7 mm aufweist.

Diese Folie besitzt einen grauen Farbton, entsprechend den Farbmaßzahlen: $L^* = 68$; $a^* = +0,35$; $b^* = -2,49$.

Beispiel 3

|  | Gew.-% |
|---|---|
| Suspensions-VC-Homopolymerisat vom K-Wert 60 | 50,00 |
| Suspensions-VC-Mischpolymerisat mit 10 % Vinylacetat K-Wert 60 | 41,81 |
| Glycerinester von Fettsäuren | 1 |
| Dioctylzinn-Stabilisator | 1 |
| Titandioxid-Rutil-Typ | 6 |
| Disazo-Gelbpigment | 0,1 |
| Dioxazin-Violettpigment | 0,07 |
| Kupferphthalocyanin-Blaupigment | 0,02 |

werden wie im Beispiel 1 zu einer 0,5 mm dicken Folie kalandriert.

Diese Folie besitzt einen grauen Farbton, entsprechend den Farbmaßzahlen: $L^* = 61,9$; $a^* = +4,10$; $b^* = +0,88$.

Beispiel 4

|  | Gew.-% |
|---|---|
| VC-Homopolymerisat, hergestellt nach dem Massepolymerisationsverfahren vom K-Wert 60 | 90,1 |
| Montansäureesterwachs | 1 |
| Dibutylzinnmaleinat-Stabilisator | 1 |
| Titandioxid-Rutil-Typ | 6 |
| Disazo-Gelbpigment | 1 |
| Dioxazin-Violettpigment | 0,7 |
| Kupferphthalocyanin-Blaupigment | 0,2 |

- 10 -

werden wie im Beispiel 2 zu einer 0,2 mm dicken Folie
verarbeitet.

Diese Folie besitzt einen grauen Farbton, entsprechend
den Farbmaßzahlen: $L^* = 36,8$; $a^* = +5,11$; $b^* = -0,44$.

Patentansprüche

1. Grau gefärbte thermoplastische Kunststoffolie, dadurch gekennzeichnet, daß sie

   a) Weißpigmenten und/oder Füllstoffen von weißer Farbe; und
   b) mindestens 2 von solchen organischen Buntpigmenten, deren Mischung einen grauen bis schwarzen Farbton besitzt, enthält.

2. Thermoplastische Kunststoffolie nach Anspruch 1, dadurch gekennzeichnet, daß die
   Komponente a) ausgewählt ist aus der Gruppe von Antimonoxid, Kaolin, Kieselsäure, Kreide, Schwerspat, Titandioxid und Zinksulfid; und die
   Komponente b) ausgewählt ist aus der Gruppe von roten und grünen organischen Pigmenten, violetten und grünen organischen Pigmenten und violetten, gelben und blauen organischen Pigmenten, wobei die roten und grünen in ihrer Mischung im Gewichtsmengenverhältnis von 6 : 10 bis 12 : 10, die violetten und grünen in ihrer Mischung im Gewichtsmengenverhältnis von 5 : 10 bis 15 : 10, und die violetten, gelben und blauen in ihrer Mischung im Gewichtsverhältnis von 20 : 30 : 10 bis 50 : 60 : 10 vorliegen.

3. Thermoplastische Kunststoffolie nach Anspruch 2, dadurch gekennzeichnet, daß die
   Gewichtsmengenverhältnisse der Komponente a) zur Komponente b) bei 1 : 0,003 bis 1 : 0,35 liegen.

4. Thermoplastische Kunststoffolie nach Anspruch 3, dadurch gekennzeichnet, daß sie von der Komponente a) und b) insgesamt 1 bis 25 Gew.-%, bezogen auf thermoplastischen Kunststoff, enthält.

5. Thermoplastische Kunststoffolie nach Anspruch 1, dadurch gekennzeichnet, daß sie im wesentlichen besteht aus 75 bis 99 Gew.-% von mindestens einem thermoplastischen Kunststoff und 1 bis 25 Gew.-% von den Komponenten a) und b).

6. Thermoplastische Kunststoffolie nach Anspruch 5, dadurch gekennzeichnet, daß der thermoplastische Kunststoff ein Vinylchlorid-Homo-, Vinylchlorid-Co- und/ oder Vinylchlorid-Pfropfpolymerisat ist.

7. Thermoplastische Kunststoffolie nach Anspruch 6, dadurch gekennzeichnet, daß sie zusätzlich übliche Stabilisatoren, Gleitmittel und Schlagzähmodifzierungsmittel enthält.

8. Verbunde, bestehend im wesentlichen aus einer Kunststoffolie nach einem der Ansprüche 1 bis 7 und anderen Folien.

9. Verbunde nach Anspruch 8, dadurch gekennzeichnet, daß die anderen Folien thermoplastische Kunststoffolien sind.

10. Verfahren zur Herstellung von Verbunden als Ausweis-, Scheck- oder Kreditkarten, dadurch gekennzeichnet, daß thermoplastische Kunststoffolien nach einem der Ansprüche 1 bis 7 eingesetzt werden.

0023318

**EUROPÄISCHER RECHERCHENBERICHT**

Europäisches
Patentamt

Nummer der Anmeldung

EP 80 10 4175

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | T.G. WEBBER et al.: "Coloring of plastics", Wiley, 1979, New York, US, R.C. EVANS: "Flexible vinyls", Kapitel 19 <br> * Seiten 165-170 * <br> -- | 1-6 |
| X | FR - A - 2 394 571 (NIPPON CARBIDE) <br> * Ansprüche; Seite 10, Zeilen 12-27 * <br> -- | 1-6 |
| | FR - A - 2 305 289 (WACKER-CHEMIE) <br> * Ansprüche; Seite 3, Zeilen 28-32 * <br> -- | 1-6 |
| X | US - A - 3 640 009 (E. KOMIYAMA) <br> * Ansprüche; Spalte 4, Zeilen 6-9 * <br> -- | 1,8-10 |
| X | GB - A - 1 213 193 (E. KOMIYAMA) <br> * Anspruche; Seite 3, Zeilen 1-6 * <br> -- | 1,8-10 |
| | DE - A - 2 654 208 (SODECO-SAIA) <br> * Ansprüche; Seite 5, Zeilen 9-11 * <br> -- | 10 |
| | US - A - 3 477 156 (MASASHI NAITO) <br> ./. | 10 |

**KLASSIFIKATION DER ANMELDUNG (Int Cl³)**

C 08 J  5/18
C 08 K  5/00
B 44 F  1/12
B 42 D  15/02

**RECHERCHIERTE SACHGEBIETE (Int. Cl.³)**

C 08 J  5/18
C 08 K  5/00
B 44 F  1/12
B 42 D  15/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-10-1980 | VAN GOETHEM |

EPA form 1503.1  06.78

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| | * Ansprüche; Spalte 2, Zeilen 33-39 * | |
| | -- | |
| | US - A - 3 468 046 (SHOJI MAKISHIMA) | 1,10 |
| | * Ansprüche; Spalte 3, Zeilen 40-42 * | |
| | -- | |
| | FR - A - 2 170 768 (TRANSACTION TECHNOLOGY) | 1,10 |
| | * Ansprüche; Seite 8, Zeilen 21-37 * | |
| | -- | |
| | DE - A - 1 694 759 (DU PONT DE NEMOURS) | 1 |
| | * Ansprüche; Seiten 8,9 * | |
| | ---- | |

**KLASSIFIKATION DER ANMELDUNG** (Int Cl³)

**RECHERCHIERTE SACHGEBIETE** (Int. Cl.³)

EPA Form 1503.2   06.78